# EUROPEAN PATENT SPECIFICATION

(11) **EP 3 001 507 B1**
(45) Date of publication and mention of the grant of the patent: **02.06.2021**
(21) Application number: 14800629.9
(22) Date of filing: 08.04.2014
(51) Int. Cl.: H01R 11/12, H01R 4/50, H02G 7/05, H02G 15/04, F16G 11/04, F16G 11/02, H02G 15/06

(54) **ANCHOR CLAMP FOR STEEL CORE CABLE**
ANKERKLEMME FÜR EIN STAHLKERNKABEL
PINCE D'ANCRAGE POUR CÂBLE À NOYAU D'ACIER

(30) Priority: 20.05.2013 ES 201330717
(43) Date of publication of application: 30.03.2016
(73) Proprietor: Sociedad Anonima de Preformados Metalicos, 31868 Izurdiaga-Irurzun (Navarra) (ES)
(72) Inventor: RUIZ DE ERENTXUN LANZ, Asier, E-31868 Izurdiaga-Irurzun-Navarra (ES)
(74) Representative: Urizar Anasagasti, Jesus Maria
(86) International application number: PCT/ES2014/070273
(87) International publication number: WO 2014/188026

(56) References cited:
- EP-A1- 1 770 305
- EP-A1- 1 770 305
- DE-B1- 1 790 187
- FR-A1- 2 740 481
- US-A- 4 362 352
- US-A- 4 428 100
- US-A- 5 015 023
- US-A- 5 369 849
- US-A1- 2007 062 718
- US-A1- 2011 053 437

## Description

### OBJECT OF THE INVENTION

The present invention, as expressed in the title, relates to a clamp for splicing and electrically connecting cables, specifically cables of the type having a resistant steel core surrounded by a plurality of aluminium strands. This anchor clamp is particularly intended for GAP-type cables, although it may also be used in other types of conductors and will prevent the conventional compression of the steel core by an external compression machine.

While ACSR (Aluminium Conductor Steel Reinforced) conductors have aluminium strands surrounding a steel core, they have at least a trapezoidal cross-section forming a gap between the steel core and the aluminium layers which is filled with grease resistant to high temperatures, such that the core can be pulled and is capable of moving inside the aluminium conductors while these remain immobile.

These types of GAP conductors must be installed tensing only the steel core. In GAP-type conductors, the aluminium layers remain in their initial strung condition, inert and without mechanical stress, while in ACSR-type conductors the aluminium strands are tensed together with the steel core during installation.

In addition to the standard tools used for stringing ACSR conductors, various elements have been specifically designed for stringing GAP-type conductors, in addition to the anchor clamps, which enable the external aluminium conductors to be spliced using an electrical connection plate, while a steel connecting member mechanically fixes the cable through the steel core.

### STATE OF THE ART

Years ago, the company filing this patent developed a machine for tensing overhead power line conductor cables, in particular GAP-type cables. Said machine comprises corresponding conical retentions wherethrough the core of the conductor to be installed passes; said retentions acting only in one direction, such that while one pulls the cable the other lets it pass freely. The conical retentions have a longitudinal gap ending in a cone wherein three or four grips are disposed, having a rough interior while being completely smooth on the exterior; therefore, the cable core that passes therethrough is retained when a movement is made (by either said cable or by the grip itself) tending towards insertion of the grip at the bottom of the conical gap (column 4, line 58-67 ES 2276576).

US 3384704 discloses a high-voltage electrical connector for splicing the stranded cables (ACSR), which includes an external splicing sleeve having a pair of conical fixing grips disposed in spaced relationship to the ends of the ferrule. WO 98/59393 discloses an electrical connector for mechanically and electrically connecting two conductors together. The connector comprises a housing with a movable jaws formed by two conical grips that define two gripping surfaces for engaging the conductor disposed on different planes forming a circular gap for the electrical conductor, such that they exert clamping pressure on the cable, which is greater the more it pulls from the outer end.

US 2003194916 discloses a connector for power lines formed from an elongated steel tube that axially includes an aluminium sleeve. The tube is subject to a mechanical compression operation such that the inner sleeve is immobilised at the same time that the outer cable filaments are immobilised.

US 2011053437 A1 discloses an electrical connector with collapsible coupler.

### DESCRIPTION OF THE INVENTION

The problem with the GAP conductors installed using the method designed by the company filing this patent lies in the fact that the anchor clamp must be compressed under mechanical tension, which considerably hampers the assembly thereof. The steel core must be subject to mechanical compression together with the outer sleeve when the conductor is installed on the line, due to which the cable must previously be tensed and in the definitive position, as it would not be possible to tense the core further once it is immobilised with respect to the outer sleeve. This manoeuvre must be performed in the tower, at the point where the cable will be connected thereto.

The present invention provides an anchor clamp that avoids the conventional mechanical compression (using an external compression machine) of the steel core and makes it possible, with the anchor clamp slidably mounted on the steel, to change its position with respect to both the steel core and to the aluminium conductor strands. The cable is tensed during the installation thereof, pulling the steel core, until determining its definitive position. Once the level of tension is agreed upon and, therefore, the final position of the steel core, a latch existing on this clamp is released such that it effectively and permanently retains it on its own, subjecting it to mechanical compression without need to use an external compression machine. Once the core is mechanically fixed, the electrical connection is performed by mechanical compression of the sleeve or outer clamp body, both on the aluminium conductor strands and on the clamp fixing piston.

This clamp has a sleeve which enables the electrical connection of the external aluminium conductors using an electrical connection plate; while internally it has anchor clamps for clamping the steel core to a connecting member that constitutes the mechanical fixing means of the cable. According to the invention, this clamp comprises:
- A plurality of conical pawls having a characteristic configuration and structure. They are elements that vary in number (3 to 6 depending on the diameter of the cable core), with a configuration such that they jointly define an inner gap having a slightly smaller diameter than that of the steel core, which they externally tighten, preventing the longitudinal movement thereof. Externally, these pawls have a truncated cone-shaped configuration, equivalent to the enveloping body in which they are housed and have a rod on their front end ending in a clamping block in a part that acts as a pawl triggering and blocking latch.
- A part for fixing the conical pawls, which operates as a cable blocking mechanism on receiving the thrust of a spring that moves the pawls towards the end of their housing while clamping the cable therebetween, preventing their movement towards the distal end of the device. This part has a screw that acts as a latch that triggers the mechanism: this factory-installed screw retains this part and the pawls in a retracted position, so that in this position thereof the steel core circulates freely in both directions (towards the distal and proximal end) and, once the core is tensed and the definitive position of the anchor clamp has been determined, this screw is removed and the thrust spring is actuated, pushing the pawls towards the blocking position, instantly immobilising the steel core. A spring interposed between these pawls and the end of the anchor clamp piston, which exerts a thrust on the pawl assembly that tends to introduce them further into the enveloping body thereof, so that the further they enter the enveloping body the harder they clamp on the steel cable core.
- Said pawl housing body subsequently has a conical housing in accordance therewith, such that once positioned, the traction of the core from the end corresponding to the minor base of the fixing pawls implies that these are introduced further in their housing and consequently further grip the steel core and, therefore, exert greater gripping force thereon. This body has on its front zone, opposite that which enters the cable core in its interior and therefore towards which the major base of its conical housing is disposed, a cylindrical zone which is fixed by mechanical compression onto the steel piston of the anchor clamp. This assembly is executed in-factory and the part therefore arrives mounted at this end at the assembly site, but with the threaded blocking screw projecting between said pawl support part, maintaining it in a retracted position wherein the pawls are open and, therefore, the cable core may run in both directions.
- A steel piston presenting at its rear end a zone having perimeter recesses wherein the anchor pawl housing body is fixed on compressing the clamp assembly in this zone. At the opposite end it has a connecting member that forms the fixing medium of the clamp and therefore of the cable. In the intermediate zone, close to the rear end, there is a zone also having perimeter recesses whereon the clamp sleeve will be fixed. At the front end, in front of the connecting member, it has a collar that enables the clamp sleeve to be fixed in a watertight manner due to a watertight seal situated therebetween.
- The sleeve or outer clamp body has an elongated configuration, with two end cylindrical zones and an intermediate conical zone. The first cylindrical zone is adapted to the exterior of the steel piston, while the conical intermediate zone has an internal housing having a configuration in accordance with the conical housing of the anchor pawls. The second cylindrical zone, situated at the rear end, has an internal gap in accordance with that of the cable conductor. The two cylindrical zones are compressed around it in order to establish the fixation to the clamp piston and to the conductor, respectively. An electrical connection plate is disposed at the front end of the clamp sleeve, integrally connected thereto, having an emergency coupling angled towards the front end which has a series of holes for the passage of the respective clamping means that enable the fixation of the clamp to the shunt body in order to execute the electrical connection.

The invention focuses on the position and configuration of the gripping pawls, which make it possible to adapt this device to any core and cable diameters just by modifying their size and form of assembly, enabling pulling of the core to tense and fix it in the corresponding clamp before subjecting it to mechanical compression. These pawls are independent elements that are evenly distributed forming a truncated cone-shaped envelope on the adaptable tube that protects the core. The sides thereof have a rough surface which, in contact with the steel core and under the pressure to which they are subjected on entering their housing, allows better retention of the core. The front part of each has a rod ending in a head housed inside a pawl-holder part that holds them all in place as they are introduced inside their housing and during their operation, wherein said pawl holder part receives the thrust of a spring which, once mounted in their housing and said housing is fixed to the pawl piston, exercises a thrust on the pawl assembly at the bottom of the housing tending towards approximation thereof to the steel core and, when it pulls in the direction of the distal end wherethrough it has been introduced it exerts a strong clamping pressure thereon, thus retaining it in relation to the clamp.

Another aspect of the invention to be pointed out constitutes the clamp sleeve, since it is an element made of aluminium and is easily deformed by compression, which enables it to be fixed both to the anchor clamp piston and to the aluminium conductor. There is conical zone between the two end compression zones wherein the pawls and envelope of said pawls are situated.

The invention also discloses a method for fixing an aluminium cable having a steel core to an anchor clamp, said method comprising a first stage of exposing a portion of the steel core of the external conductors that surround it and sheathing the cable in the clamp sleeve. The housing of the pawls and clamp piston is sheathed over the core, said elements leaving the factory forming a single body, until its rear end of smaller diameter (equivalent to the outer diameter of the cable) abuts the aluminium conductor strands. Next the cable is tensed, pulling the steel core using a tensioning machine such as that patented by this company years ago and, in turn, cutting the conductive layer as required. Once the most suitable position of the cable has been determined, the device is unblocked, removing the screw that blocks the thrusting part of the retaining pawls so that the part whereon they are mounted moves as a result of the spring that pushes it towards a position wherein the pawls are locked at the bottom of their envelope and begin to exert pressure on the steel core, which is greater the more it pulls from the outer end. Next, the clamp sleeve is fixed in a collar existing in said piston and the clamp sleeve is compressed by exerting pressure on the two end cylindrical zones, which are separated by a truncated cone-shaped zone coinciding with the envelope of the core fixing pawls, such that the wider front zone is joined to the clamp piston, while the narrower rear zone exerts pressure on the cable on the aluminium conductors. Lastly, the electrical connection is performed by means of the electrical connection plate associated with the sleeve or outer clamp body.

The advantages of this clamp namely include the simplicity of the fixation method thereof at the end of the cable, wherein the use of external compression machines for compressing the steel core is avoided, since the tensing operations thereof, pulling on the inner steel core, are performed prior to mounting the clamp in the corresponding anchoring position.

### DESCRIPTION OF THE FIGURES

As a complement to the present description and for the purpose of helping to make the characteristics of the invention more readily understandable, this specification is accompanied by a set of figures which, by way of illustration and not limitation, represent the following:

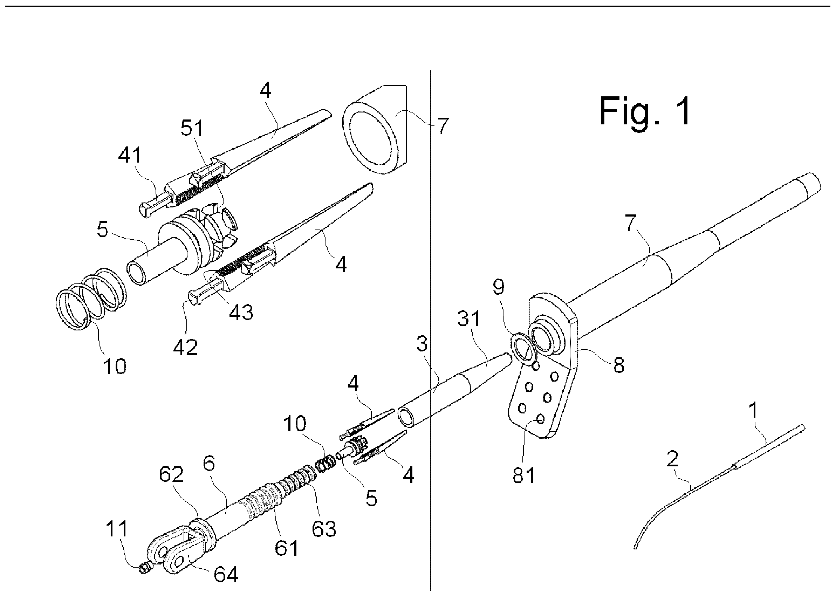

Figure 1 shows a perspective view, with all the elements of this clamp deployed in the assembly position;
Figure 2 shows plan and elevational views of an anchor clamp for steel core cable;
Figure 3 shows a longitudinal sectional view of this clamp; and
Figures 4 and 5 show details of the intermediate zone wherein the fixing pawls (4) act, respectively in the position in which they are unblocked and therefore the core (2) circulates freely in both directions and in a blocking position, wherein the tension of the core towards the rear end wherethrough the cable enters (1) implies the movement of the pawls (4) to the bottom of their housing (3) and therefore the anchoring of the core (2) by these in relation to the envelope (3) and, consequently, to the piston through its termination (63).

### PREFERRED EMBODIMENT OF THE INVENTION

As can be observed in the referenced figures, the clamp of the present invention is intended for anchoring a cable (1) formed from a plurality of aluminium conductors wrapped around a steel core (2). The mechanical fixation must be executed mainly on the core (2), while the electrical connection must be established through the conducting strands surrounding the core, to which end this clamp integrates these two functions: on the one hand, joining the core (2) to the piston (6) disposed at the front end of a connecting member (64) which enables the fixation thereof to a coupling point and, on the other, joining the cable conductors (1) to the electrical connection plate (8), which has a series of holes (81) for the passage of the respective clamping means that enable the fixation of the clamp to the shunt body.

The elements that make up the device for mechanically anchoring the core (2) to the piston (6) consist of a series of pawls (4) housed in a conical element (3), which also has coupling means for coupling with the piston (6). Furthermore, the elements that enable the electrical connection of the external cable conductors (1) to the electrical connection plate (8) are the clamp sleeve (7) and the piston (6) itself, to which the bodysleeve (7) is also joined, forming an assembly upon connecting the cable that enables the suspension or mechanical anchoring and electrical shunting thereof.

The envelope (3) of the pawls (4) has a first rear end (31) having a truncated cone-shaped configuration, in which the outer diameter of its minor base is equivalent to that of the cable (1). The front zone of said envelope (3) is cylindrical and has an inner diameter equivalent to that of the rear end (63) of the piston (6).

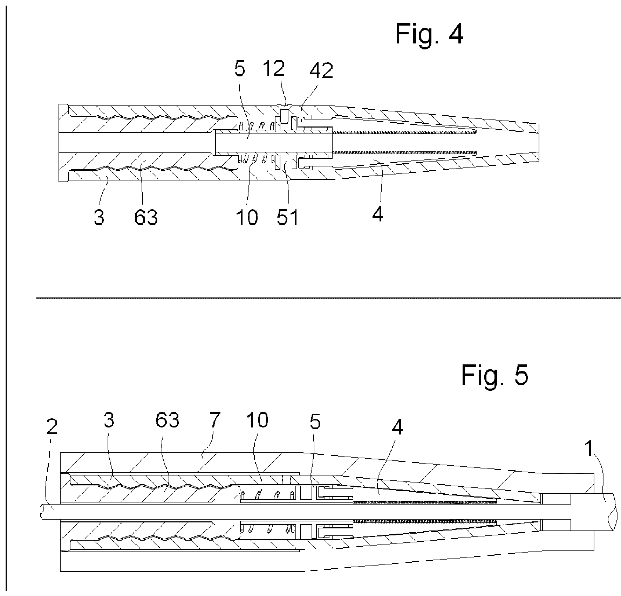

As for the pawls (4), these are various elongated elements that are assembled in a pawl-holder part (5) and have a truncated cone-shaped configuration that is externally equivalent to the internal gap of the envelope (31) whereto they are adapted. Each of these pawls (4) have, on their inner face (43), an engraving that defines a rough duct wherethrough the steel core (2) is introduced; on the front part they have an elongated rod (41) that ends in a bulging head (42) housed in a pawl-holder body (5), which annularly defines a series of cavities for such purposes. This pawl-holder part (5) ends frontally in a rod whereon a thrust spring (10) is positioned which, on abutting with the end (63) of the piston (6), pushes the pawl (4) assembly inside the housing (31); in the intermediate zone it defines an annular channel (51) in which the end of the screw or rod (12) is positioned, which initially retains this part and the pawls (4) outside of their conical housing in order for the core (2) to run in both directions (see figure 4); the rear end defines annular channels wherein the rod (41) and head (42) of the pawls (4) are adapted and inserted. The pawls (4) are made of metallic material, such as aluminium or steel.

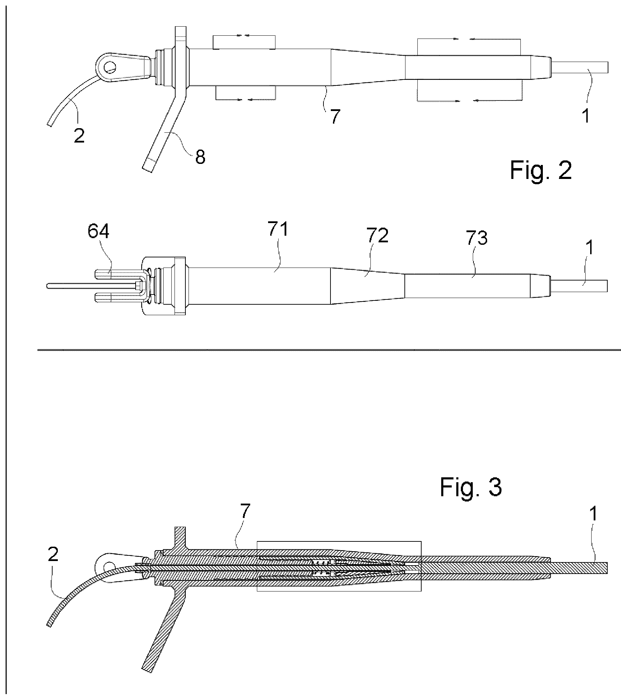

On the one hand, the piston (6) performs the coupling with the envelope (3), which internally includes the pawls (4) that anchor the cable core (2), while defining means for fixing the sleeve (7) of the clamp and the connecting member of the anchor clamp. This piston (6) has a cylindrical body with an axial conduit having an adequate diameter for the passage of the core (2), ending at the rear end thereof in a zone (63) provided with perimeter recesses that externally determine a diameter equivalent to the gap of the envelope (3) in which it is introduced and fixed by means of pressure, upon positioning the pawls (4) and pawl-holder part (5) in the position provided in figure 4; behind this zone there is another intermediate zone (61) also provided with perimeter recesses, which is coupled to the clamp sleeve (7) on compressing the part on the exterior thereof in the zone marked in figure 2, in both cases on producing a deformation of the external material that is introduced inside the perimeter recesses in zones (61) and (63). This element is completed by a collar (62) that is coupled to the front part of the sleeve (7), interposing a watertight seal (9) and with an end (64) that forms the connecting member of the clamp that enables fixation thereof to a coupling point.

The clamp sleeve (7) has two cylindrical zones (71-73) separated by a truncated cone-shaped zone (72). The front zone (71) has an internal diameter equivalent to the zone (61) of the piston (6) whereon it is fixed, gripping it externally in the zone marked between two arrows in figure 2, such that both elements (6-7) are flattened and joined together in this zone. The truncated cone-shaped zone (72) accommodates the core retention mechanism made up of the pawls (4) and the envelope (3). As for the zone (73), it has an inner diameter equivalent to the cable (1), to which it is fixed on clamping it from the exterior in the zone marked between two arrows in figure 2, such that the aluminium conductors are integrated and remain in close contact with the sleeve (7). This element is made of aluminium, mechanically shaping or moulding the three zones (71-72-73), thereby avoiding welded joins and, therefore, hot points in the conductor.

The sleeve (7) of the clamp has, next to the front end, the electrical connection plate (8) fixed by means of welding. This electrical connection plate has a series of holes (81) for the passage of the respective clamping means that enable the fixation of the clamp to the shunt body. A watertight seal (9) is interposed in front of the electrical connection plate (8), on the edge of the sleeve (7) where it is coupled to the collar (62). The plug (11) introduced through the end of the core (2) in the through-hole defined for such purpose by the piston (6) makes it possible to ensure the watertightness of this zone.

The assembly of this clamp is performed in situ, i.e. in the place where it is assembled, and comprises a first stage consisting of exposing the steel core (2) of the cable (1) and sheathing the sleeve (7) of the clamp over the conductor, with the electrical connection body outwards. Next, the envelope (3) and the piston (6), which are already assembled in the position shown in figure 4 in the portion of core (2) freed from the aluminium conductors, are inserted until said envelope abuts the edge thereof. Next, the core tensing operation (2) commences, pulling on the core using manual or mechanical means until taking it to the adequate position and, upon determining this position, the blocking part (5) of the retaining screw (12) and the tension of the core (2) itself drags the pawls (4) to the bottom of the envelope (3), being retained by these as shown in figure 5. Lastly, the sleeve (7) of the clamp moves until the front end thereof is disposed in opposition to the collar (62), taking care to dispose the watertight seal (9) interposed therebetween. In this position, the cylindrical zones (71) and (73) of said sleeve (7) are clamped in order to establish contact respectively with the piston (6) of the clamp and with the aluminium conductors of the cable (1), whereupon it only remains to execute the electrical connection through the electrical connection plate (8) welded to the sleeve (7).

Having sufficiently described the nature of the invention, in addition to an example of a preferred embodiment, it is hereby stated for the relevant purposes that the materials, shape, size and layout of the described elements may be modified, provided that it does not imply altering the essential characteristics of the invention claimed below:

## Claims

1. An anchor clamp intended for anchoring a cable from a plurality of aluminium conductors wrapped around a steel core for its mechanical and electrical fixation, wherein the mechanical fixation is executed on the core (2) by joining the core (2) to a piston (6) disposed at the front end of a connecting member (64) which enables the fixation thereof to a coupling point, while the electrical connection is executed by joining the cable conductors (1) to the electrical connection plate (8), which has a series of holes (81) for the passage of respective clamping means that enable the fixation of the clamp to a shunt body, the anchor clamp comprising:
- a series of elongated pawls (4) having a configuration such as to jointly form a truncated cone, that is externally equivalent to an internal gap of an envelope (3) whereto they are adapted and internally define a gap that houses the steel core (2); these conical pawls being individual elements having an engraving or roughness on the inner face thereof and an elongated rod (41) ending in a head (42), both having the configuration capable of being sustained in a pawl-holder body (5);
- the piston (6) having a cylindrical body with an axial conduit having a diameter for the passage of the core (2), ending at the rear end thereof in a zone (63), having an intermediate zone (61) and defining frontally an end (64) that forms the connecting member of the clamp, which enables the fixation thereof at a coupling point; and
- a sleeve (7) that surrounds the foregoing and constitutes the sleeve of the clamp, having at the front end thereof the electrical connection plate (8);
**characterized in that** the anchor clamp further comprises:
- the pawl-holder body (5) which annularly defines a series of cavities wherein the conical pawls (4) are coupled through the end by way of the head (42); and frontally defining the rod whereon a thrust spring is positioned (10) which, on abutting with the end (63) of a piston (6), pushes the conical pawl (4) assembly inside an envelope (3);
- the envelope (3) having a first truncated cone-shaped rear zone (31), wherein the conical pawls (4) are housed, which trap the core (2) in relation to the envelope (3), the envelope (3) having a cylindrical configuration in the front zone, having an inner diameter equal to that of the rear end (63) of the piston (6) for fixing the end of the piston (6), provided with perimeter recesses, that externally determine a diameter equivalent to the gap of the envelope (3) in which it is introduced and fixed by means of pressure once the conical pawls (4) which are mounted on the pawl-holder body (5) are disposed in the interior thereof, mounted on the pawl- holder body (5) is a blocking screw (12), in the retention position, in which position said blocking screw (12) threads radially in the envelope in correspondence with an intermediate zone of the pawl-holder body (5) which defines an annular channel (51) in which the end of the screw (12) is initially housed to maintain this part in a forward position wherein the conical pawls (4) are not housed in their conical housing and therefore the steel core (2) is movable longitudinally in both directions, while not withdrawing this screw (12); while the sleeve (7) has two cylindrical zones (71-73) separated by a truncated cone-shaped zone (72), once mechanical means hold the steel core (2) into the desired definitive position the screw is removable to actuate the thrust spring (10) pushing the conical pawls (4) towards the rear immobilising the steel core (2), the front cylindrical zone (71) has an internal diameter equal to that of the intermediate zone (61) of the piston (6) whereon it is fixed, as a result of the pressure exerted by compression; the intermediate truncated cone-shaped zone (72) accommodates the core retention mechanism made up of the conical pawls (4) and the envelope (3); the cylindrical rear zone (73) is adapted to have internally a diameter equivalent to that of the cable (1), to which it is fixable on clamping it from the exterior, and the electrical connection is performable by mechanical compression of the sleeve (7), both on the conductor strands and on the clamp fixing piston (6).

2. The anchor clamp for steel core cable, according to claim 1, **characterised in that** the clamp sleeve (7) is made of aluminium from a part mechanically formed to obtain corresponding cylindrical zones (71-73) separated by an intermediate truncated cone-shaped zone (72).

3. The anchor clamp for steel core cable, according to claim 1, **characterised in that** the piston (2) has a through-duct that accommodates the steel core (2) of the cable, which projects from the connecting member during assembly and, upon fixing and cutting the core (2) it is protected by a watertight plug (11).

4. The anchor clamp for steel core cable, according to claim 1, **characterised in that** a watertight seal (9) is interposed in front of the electrical connection plate (8) on the edge of the sleeve (7) in its coupling to the collar (62).

5. A method for assembling an anchor clamp according to claim 1 for steel core cable, which **comprises** the following phases:
- exposing the steel core (2) of the cable (1),
- sheathing the sleeve (7) of the clamp over the conductor, with the electrical connection plate facing outwards,
- inserting the envelope (3) and the piston (6), mounted therebetween in-factory, in the portion of the core (2) freed from the aluminium conductors, until said envelope abuts the edge thereof,
- tensing the cable by pulling the steel core (2) until taking it to the desired position; in this process the necessary length of steel core shall be exposed by cutting the aluminium strands,
- positioning the envelope (3) assembly and piston (6) assembled in-factory in their definitive position, and releasing the pawl-holder part (5) from the blocking position established by the screw (12) so that the tension of the core (2) on the conical pawls causes them to grip the core,
- moving the sleeve (7) of the clamp towards the front end until abutting with a collar (62) existing on the front zone of the piston interposing a watertight seal (9) therebetween,
- releasing the core of the stringing elements by means of the adequate manoeuvres and anchoring the piston (6) to the adequate anchoring point,
- clamping the cylindrical zones (71) and (73) of said sleeve (7) until coming into contact, respectively, with the piston of the clamp (6) and with the aluminium conductors of the cable (1), and
- establishing the electrical connection through the electrical connection plate (8) integrally connected to the sleeve (7).

## Patentansprüche

1. Ankerklemme zum Verankern eines Kabels aus einer Vielzahl von Aluminiumleitern, die zur mechanischen und elektrischen Befestigung um einen Stahlkern gewickelt sind, wobei die mechanische Befestigung am Kern (2) durch Zusammenfügen des Kerns (2) mit einem Kolben (6) ausgeführt wird, der am vorderen Ende eines Verbindungselements (64) angeordnet ist, das die Befestigung davon an einem Kopplungspunkt ermöglicht, während die elektrische Verbindung durch Zusammenfügen der Kabelleiter (1) mit der elektrischen Verbindungsplatte (8) ausgeführt wird, die eine Reihe von Löchern (81) für den Durchgang von jeweiligen Klemmmitteln aufweist, welche die Befestigung der Klammer an einem Nebenschlusskörper ermöglichen, wobei die Ankerklemme umfasst:
- eine Reihe von länglichen Sperrklinken (4) mit einer derartigen Konfiguration, dass sie gemeinsam einen Kegelstumpf bilden, der äußerlich einem inneren Spalt einer Umhüllung (3) entspricht, an den sie angepasst sind und innerlich einen Spalt definieren, in dem der Stahlkern (2) untergebracht ist; wobei diese kegelförmigen Sperrklinken einzelne Elemente mit einer Gravur oder Rauheit auf ihrer Innenfläche und eine längliche Stange (41) aufweisen, die in einem Kopf (42) enden, wobei beide die Konfiguration aufweisen, in einem Sperrklinkenhalterkörper (5) gehalten werden zu können;
- den Kolben (6), der einen zylindrischen Körper mit einer axialen Leitung mit einem Durchmesser für den Durchgang des Kerns (2) aufweist, der an seinem hinteren Ende in einer Zone (63) endet, eine Zwischenzone (61) aufweist und frontal ein Ende (64) definiert, welches das Verbindungselement der Klemme bildet, das die Befestigung davon an einem Kopplungspunkt ermöglicht; und
- eine Hülse (7), die vorstehenden umgibt und die Hülse der Klemme bildet, die an dem vorderen Ende davon die elektrische Verbindungsplatte (8) aufweist; **dadurch gekennzeichnet, dass** die Ankerklemme ferner umfasst:
- den Sperrklinkenhalterkörper (5), der ringförmig eine Reihe von Hohlräumen definiert, wobei die kegelförmigen Sperrklinken (4) mittels des Kopfs (42) durch das Ende gekoppelt sind; und frontal die Stange definieren, auf der eine Druckfeder positioniert ist (10), die beim Anlegen an das Ende (63) eines Kolbens (6) die kegelförmige Sperrklinke (4) in eine Umhüllung (3) drückt;
- die Umhüllung (3), die eine erste kegelstumpfförmige hintere Zone (31) aufweist, in der die kegelförmigen Sperrklinken (4) untergebracht sind, die den Kern (2) in Bezug auf die Umhüllung (3) einfangen, wobei die Umhüllung (3) eine zylindrische Konfiguration in der vorderen Zone aufweist, mit einem Innendurchmesser, der dem des hinteren Endes (63) des Kolbens (6) zum Befestigen des Endes des Kolbens (6) entspricht, der mit Umfangsaussparungen versehen ist, die äußerlich einen Durchmesser bestimmen, der dem Spalt der Umhüllung (3) entspricht, in den dieser eingeführt und mittels Druck befestigt wird, sobald die kegelförmigen Sperrklinken (4), die an dem Sperrklinkenhalterkörper (5) angebracht sind, im Inneren davon angeordnet sind, wobei an dem Sperrklinkenhalterkörper (5) eine Blockierschraube (12) in der Rückhalteposition angebracht ist, wobei in der Position die Blockierschraube (12) entsprechend einer Zwischenzone des Sperrklinkenhalterkörpers (5), der einen ringförmigen Kanal (51) definiert, in dem das Ende der Schraube (12) anfänglich untergebracht ist, radial eingeschraubt ist, um diesen Teil in einer vorderen Position zu halten, wobei die kegelförmigen Sperrklinken (4) nicht in ihrem kegelförmigen Gehäuse untergebracht sind und daher der Stahlkern (2) in beide Richtungen in Längsrichtung beweglich ist, ohne diese Schraube (12) herauszuschrauben; während die Hülse (7) zwei zylindrische Zonen (71-73) aufweist, die durch eine kegelstumpfförmige Zone (72) getrennt sind, sobald die mechanischen Mittel den Stahlkern (2) in der gewünschten definitiven Position halten, die Schraube herausschraubbar ist, um die Druckfeder (10) zu betätigen, um die kegelförmigen Sperrklinken (4) nach hinten zu drücken und den Stahlkern (2) bewegungsunfähig zu machen, wobei die vordere zylindrische Zone (7) einen Innendurchmesser aufweist, der dem der Zwischenzone (61) des Kolbens (6) entspricht, auf der sie befestigt ist, als Ergebnis des durch Kompression ausgeübten Drucks; wobei die kegelstumpfförmige Zwischenzone (72) den Kernrückhaltemechanismus unterbringt, der aus Sperrklinken (4) und der Umhüllung (3) hergestellt ist; wobei die zylindrische hintere Zone (73) dazu ausgelegt ist, um innerlich einen Durchmesser aufzuweisen, der dem des Kabels (1) entspricht, an dem diese beim Festklemmen von außen befestigt werden kann, und die elektrische Verbindung durch mechanische Kompression der Hülse (7) durchgeführt werden kann, sowohl an den Leiterlitzen als auch am Klemmenbefestigungskolben (6).

2. Ankerklemme für ein Stahlkernkabel nach Anspruch 1, **dadurch gekennzeichnet, dass** die Klemmhülse (7) aus Aluminium aus einem mechanisch gebildeten Teil hergestellt ist, um entsprechende zylindrische Zonen (71-73) zu erhalten, die durch eine kegelstumpfförmige Zwischenzone (72) getrennt sind.

3. Ankerklemme für ein Stahlkernkabel nach Anspruch 1, **dadurch gekennzeichnet, dass** der Kolben (2) einen Durchgangskanal aufweist, der den Stahlkern (2) des Kabels aufnimmt, der während der Montage aus dem Verbindungselement herausragt und beim Befestigen und Schneiden des Kerns (2) durch einen wasserdichten Stecker (11) geschützt ist.

4. Ankerklemme für ein Stahlkernkabel nach Anspruch 1, **dadurch gekennzeichnet, dass** eine wasserdichte Dichtung (9) vor der elektrischen Verbindungsplatte (8) am Rand der Hülse (7) in ihrer Kopplung mit dem Bund (62) dazwischen angeordnet ist.

5. Verfahren zur Montage einer Ankerklemme nach Anspruch 1 für ein Stahlkernkabel, das die folgenden Phasen **umfasst:**
- Freilegen des Stahlkerns (2) des Kabels (1),
- Umhüllen der Hülse (7) der Klemme über dem Leiter, wobei die elektrische Verbindungsplatte nach außen weist,
- Einsetzen der Umhüllung (3) und des Kolbens (6), die werksseitig dazwischen angebracht sind, in den von den Aluminiumleitern befreiten Teil des Kerns (2), bis die Umhüllung an dem Rand davon anliegt,
- Spannen des Kabels durch Ziehen des Stahlkerns (2), bis er in die gewünschte Position gebracht ist; bei diesem Verfahren sollte die erforderliche Länge des Stahlkerns durch Schneiden der Aluminiumlitzen freigelegt werden,
- Positionieren der werksseitig angebrachten Umhüllungsanordnung (3) und des Kolbens (6) in ihrer definitiven Position und Freigeben des Sperrklinkenhalterteils (5) aus der durch die Schraube (12) hergestellten Blockierposition, so dass die Spannung des Kerns (2) auf den kegelförmigen Sperrklinken bewirkt, dass diese den Kern ergreifen,
- Bewegen der Hülse (7) der Klemme in Richtung des vorderen Endes, bis diese an einem Bund (62) anliegt, der an der vorderen Zone des Kolbens vorhanden ist und eine wasserdichte Dichtung (9) dazwischen anordnet,
- Freigeben des Kerns der Bespannungselemente mittels geeigneter Manöver und Verankern des Kolbens (6) am geeigneten Verankerungspunkt,
- Klemmen der zylindrischen Zonen (71) und (73) der Hülse (7) bis zum Kontakt mit dem Kolben der Klemme (6) bzw. mit den Aluminiumleitern des Kabels (1) und
- Erstellen der elektrischen Verbindung durch die elektrische Verbindungsplatte (8), die einstückig mit der Hülse (7) verbunden ist.

## Revendications

1. Pince d'ancrage destinée à ancrer un câble d'une pluralité de conducteurs en aluminium enroulés autour d'une âme en acier pour sa fixation mécanique et électrique, dans laquelle la fixation mécanique est exécutée sur l'âme (2) en joignant l'âme (2) à un piston (6) disposé à l'extrémité avant d'un organe de raccordement (64) qui permet la fixation de celle-ci à un point de couplage, tandis que le raccordement électrique est exécuté en joignant les conducteurs de câble (1) à la plaque de raccordement électrique (8), qui a une série de trous (81) pour le passage des moyens de serrage respectifs qui permettent la fixation de la pince à un corps de dérivation, la pince d'ancrage comprenant :
- une série de crochets allongés (4) ayant une configuration telle qu'ils forment conjointement un cône tronqué, qui est extérieurement équivalent à un interstice interne d'une enveloppe (3) à laquelle ils sont adaptés et définissent intérieurement un interstice qui loge l'âme en acier (2) ; ces crochets coniques étant des éléments individuels ayant une gravure ou une rugosité sur la face interne de ceux-ci et une tige allongée (41) se terminant par une tête (42), tous deux ayant la configuration pouvant être soutenue dans un corps de support de crochet (5) ;
- le piston (6) ayant un corps cylindrique avec un conduit axial ayant un diamètre pour le passage de l'âme (2), se terminant à l'extrémité arrière de celui-ci par une zone (63), ayant une zone intermédiaire (61) et définissant frontalement une extrémité (64) qui forme l'organe de raccordement de la pince, qui permet la fixation de celle-ci à un point de couplage ; et
- un manchon (7) qui entoure ce qui précède et constitue le manchon de la pince, ayant à l'extrémité avant de celui-ci la plaque de raccordement électrique (8) ; **caractérisée en ce que** la pince d'ancrage comprend en outre :
- le corps de support de crochet (5) qui définit annulairement une série de cavités dans laquelle les crochets coniques (4) sont couplés par l'extrémité par le biais de la tête (42) ; et définissant frontalement la tige sur laquelle est positionné un ressort de poussée (10) qui, venant en butée avec l'extrémité (63) d'un piston (6), pousse l'ensemble de crochets coniques (4) à l'intérieur d'une enveloppe (3) ;
- l'enveloppe (3) ayant une première zone arrière en forme de cône tronqué (31), dans laquelle les crochets coniques (4) sont logés, qui emprisonnent l'âme (2) par rapport à l'enveloppe (3), l'enveloppe (3) ayant une configuration cylindrique dans la zone avant, ayant un diamètre interne égal à celui de l'extrémité arrière (63) du piston (6) pour la fixation de l'extrémité du piston (6), pourvue de renfoncements périphériques, qui déterminent extérieurement un diamètre équivalent à l'interstice de l'enveloppe (3) où il est introduit et fixé au moyen de pression une fois que les crochets coniques (4) qui sont montés sur le corps de support de crochet (5) sont disposés à l'intérieur de celui-ci, une vis de blocage (12) est montée sur le corps de support de crochet (5), dans la position de retenue, position où ladite vis de blocage (12) se visse radialement dans l'enveloppe en correspondance avec une zone intermédiaire du corps de support de crochet (5) qui définit un canal annulaire (51) où l'extrémité de la vis (12) est initialement logée pour maintenir cette pièce dans une position avancée dans laquelle les crochets coniques (4) ne sont pas logés dans leur logement conique et donc l'âme en acier (2) est mobile longitudinalement dans les deux sens, tandis que cette vis (12) n'est pas retirée ; tandis que le manchon (7) a deux zones cylindriques (71-73) séparées par une zone en forme de cône tronqué (72), une fois que des moyens mécaniques maintiennent l'âme en acier (2) dans la position définitive souhaitée la vis est amovible pour actionner le ressort de poussée (10) poussant les crochets coniques (4) vers l'arrière immobilisant l'âme en acier (2), la zone cylindrique avant (7) a un diamètre interne égal à celui de la zone intermédiaire (61) du piston (6) sur laquelle elle est fixée, à la suite de la pression exercée par la compression ; la zone en forme de cône tronqué intermédiaire (72) reçoit le mécanisme de retenue de l'âme constitué des crochets coniques (4) et de l'enveloppe (3) ; la zone arrière cylindrique (73) est adaptée pour avoir intérieurement un diamètre équivalent à celui du câble (1), auquel il est fixable en le serrant de l'extérieur, et le raccordement électrique peut être effectué par compression mécanique du manchon (7), à la fois sur les brins conducteurs et sur le piston de fixation de la pince (6).

2. Pince d'ancrage pour câble à âme en acier, selon la revendication 1, **caractérisée en ce que** le manchon de serrage (7) est constitué en aluminium à partir d'une pièce formée mécaniquement pour obtenir des zones cylindriques correspondantes (71-73) séparées par une zone en forme de cône tronqué intermédiaire (72).

3. Pince d'ancrage pour câble à âme en acier, selon la revendication 1, **caractérisée en ce que** le piston (2) a un conduit traversant qui reçoit l'âme en acier (2) du câble, qui fait saillie de l'organe de raccordement lors de l'assemblage et, lors de la fixation et de la découpe de l'âme (2), il est protégé par un bouchon étanche (11).

4. Pince d'ancrage pour câble à âme en acier, selon la revendication 1, **caractérisée en ce qu'**un joint étanche (9) est interposé devant la plaque de raccordement électrique (8) sur le bord du manchon (7) dans son couplage à la collerette (62).

5. Procédé d'assemblage d'une pince d'ancrage selon la revendication 1 pour câble à âme en acier, qui **comprend** les phases suivantes :
- exposer l'âme en acier (2) du câble (1),
- gainer le manchon (7) de la pince sur le conducteur, avec la plaque de raccordement électrique tournée vers l'extérieur,
- insérer l'enveloppe (3) et le piston (6), montés entre eux en usine, dans la partie de l'âme (2) libérée des conducteurs en aluminium, jusqu'à ce que ladite enveloppe touche le bord de celle-ci,
- tendre le câble en tirant sur l'âme en acier (2) jusqu'à l'amener dans la position souhaitée ; dans ce processus la longueur nécessaire de l'âme en acier doit être exposée en coupant les brins en aluminium,
- positionner l'ensemble d'enveloppe (3) et le piston (6) assemblés en usine dans leur position définitive, et libérer la pièce de support de crochet (5) de la position de blocage établie par la vis (12) de sorte que la tension de l'âme (2) sur les crochets coniques les amène à saisir l'âme,
- déplacer le manchon (7) de la pince vers l'extrémité avant jusqu'à venir en butée avec une collerette (62) existant sur la zone avant du piston en interposant un joint étanche (9) entre eux,
- libérer l'âme des éléments de cordage au moyen des manœuvres adéquates et ancrer le piston (6) au point d'ancrage adéquat,
- serrer les zones cylindriques (71) et (73) dudit manchon (7) jusqu'à ce qu'elles viennent en contact, respectivement, avec le piston de la pince (6) et avec les conducteurs en aluminium du câble (1), et
- établir le raccordement électrique à travers la plaque de raccordement électrique (8) raccordée de manière solidaire au manchon (7).
